(19) **Europäisches Patentamt / European Patent Office / Office européen des brevets**

(11) **EP 4 697 209 A1**

(12) ## EUROPEAN PATENT APPLICATION
published in accordance with Art. 153(4) EPC

(43) Date of publication:
**18.02.2026 Bulletin 2026/08**

(21) Application number: **23937433.3**

(22) Date of filing: **15.05.2023**

(51) International Patent Classification (IPC):
**G06F 18/2413** (2023.01)   **G06F 18/22** (2023.01)
**G06F 40/268** (2020.01)   **G06N 20/00** (2019.01)

(52) Cooperative Patent Classification (CPC):
**G06F 40/268; G06F 18/22; G06F 18/2413;
G06F 40/284; G06N 20/00**

(86) International application number:
**PCT/JP2023/018077**

(87) International publication number:
**WO 2024/236687 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **ITSUI, Hiroyasu
Tokyo 100-8310 (JP)**

(74) Representative: **Pfenning, Meinig & Partner mbB
Patent- und Rechtsanwälte
Theresienhöhe 11a
80339 München (DE)**

(54) **INFORMATION PROCESSING DEVICE, GENERATION METHOD, AND GENERATION PROGRAM**

(57)    An information processing device (100) includes an acquisition unit (120) that acquires multiple pieces of learning data in each of which a document and a category have been associated with each other, a morphological analysis performance unit (130) that performs morphological analysis on each of the multiple pieces of learning data, an extraction unit (140) that extracts words being predicates from among a plurality of words obtained by the morphological analysis, and a calculation generation unit (150) that generates a learned model by calculating pointwise mutual information based on the plurality of words obtained by the morphological analysis, a plurality of extracted words, and a plurality of categories, the learned model being a learned model which outputs a category corresponding to data when the data is inputted.

FIG. 2

EP 4 697 209 A1

**Description**

**TECHNICAL FIELD**

The present disclosure relates to an information processing device, a generation method and a generation program.

**BACKGROUND ART**

In the field of language, the technology of Artificial Intelligence (AI) is being used. For example, there has been proposed a learned model that infers the meaning of a word included in a character string (see Patent Reference 1). The learned model in the Patent Reference 1 is generated by means of unsupervised learning.

**PRIOR ART REFERENCE**

**PATENT REFERENCE**

Patent Reference 1: WO 2022/049668

**SUMMARY OF THE INVENTION**

**PROBLEM TO BE SOLVED BY THE INVENTION**

In cases where the unsupervised learning is used as in the above-described technology, there is a problem in that inference accuracy of the learned model generated by means of the unsupervised learning is low.
An object of the present disclosure is to generate a learned model having high inference accuracy.

**MEANS FOR SOLVING THE PROBLEM**

An information processing device according to an aspect of the present disclosure is provided. The information processing device includes an acquisition unit that acquires multiple pieces of learning data in each of which a document and a category have been associated with each other, a morphological analysis performance unit that performs morphological analysis on each of the multiple pieces of learning data, an extraction unit that extracts words being predicates from among a plurality of words obtained by the morphological analysis, and a calculation generation unit that generates a learned model by calculating pointwise mutual information based on the plurality of words obtained by the morphological analysis, a plurality of extracted words, and a plurality of categories, the learned model being a learned model which outputs a category corresponding to data when the data is inputted.

**EFFECT OF THE INVENTION**

According to the present disclosure, a learned model having high inference accuracy can be generated.

**BRIEF DESCRIPTION OF THE DRAWINGS**

Fig. 1 is a diagram showing the configuration of hardware included in an information processing device in a first embodiment.
Fig. 2 is a block diagram showing functions included in the information processing device in a learning phase in the first embodiment.
Fig. 3 is a diagram showing a concrete example of a process executed by the information processing device in the first embodiment.
Figs. 4(A) and 4(B) are diagrams showing examples of the image of a learned model in the first embodiment.
Fig. 5 is a block diagram showing functions included in an information processing device in a utilization phase in the first embodiment.
Fig. 6 is a diagram showing an example of the image of the learned model in the second embodiment.
Fig. 7 is a block diagram showing functions included in an information processing device in the learning phase in a third embodiment.

Fig. 8 is a diagram showing a concrete example of a process executed by the information processing device in the third embodiment.

Fig. 9 is a diagram showing an example of the image of a first learned model in the third embodiment.

Fig. 10 is a block diagram showing functions included in an information processing device in the utilization phase in the third embodiment.

Fig. 11 is a diagram showing a concrete example of a process executed by a second learned model in the third embodiment.

## MODE FOR CARRYING OUT THE INVENTION

Embodiments will be described below with reference to the drawings. The following embodiments are just examples and a variety of modifications are possible within the scope of the present disclosure.

First Embodiment

<Learning Phase>

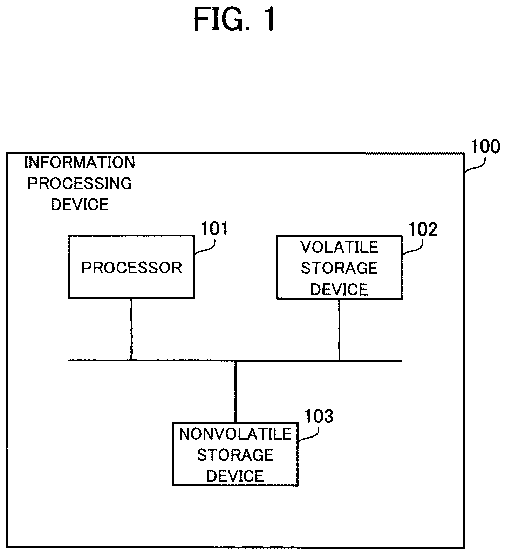

Fig. 1 is a diagram showing the configuration of hardware included in an information processing device in a first embodiment. The information processing device 100 is a device that executes a generation method. The information processing device 100 can be referred to also as a learning device. Further, the information processing device 100 can be referred to also as a computer.

The information processing device 100 includes a processor 101, a volatile storage device 102 and a nonvolatile storage device 103.

The processor 101 controls the whole of the information processing device 100. The processor 101 is a Central Processing Unit (CPU), a Field Programmable Gate Array (FPGA) or the like, for example. The processor 101 can also be a multiprocessor. Further, the information processing device 100 may include processing circuitry.

The volatile storage device 102 is main storage of the information processing device 100. The volatile storage device 102 is a Random Access Memory (RAM), for example. The nonvolatile storage device 103 is auxiliary storage of the information processing device 100. The nonvolatile storage device 103 is a Hard Disk Drive (HDD) or a Solid State Drive (SSD), for example.

Next, functions of the information processing device 100 will be described below.

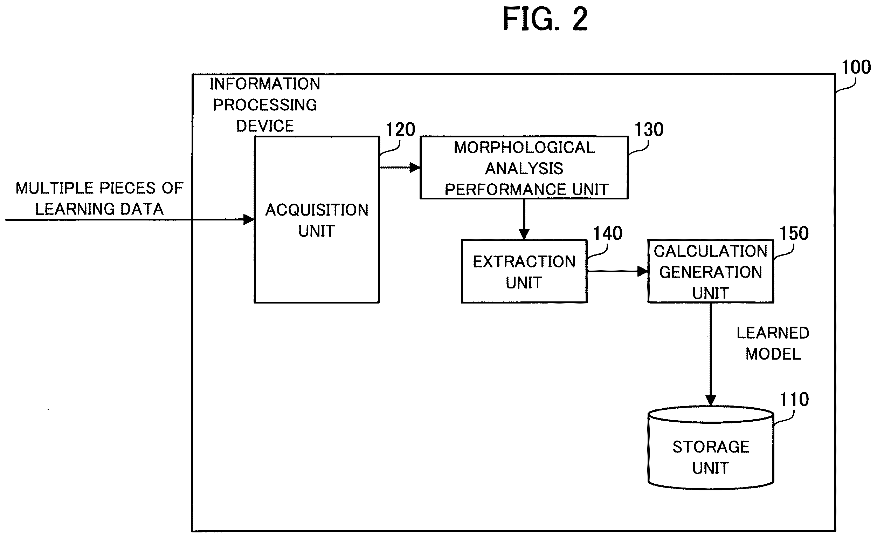

Fig. 2 is a block diagram showing functions included in the information processing device in a learning phase in the first embodiment. The information processing device 100 includes a storage unit 110, an acquisition unit 120, a morphological analysis performance unit 130, an extraction unit 140 and a calculation generation unit 150.

The storage unit 110 may be implemented as a storage area reserved in the volatile storage device 102 or the nonvolatile storage device 103.

Part or all of the acquisition unit 120, the morphological analysis performance unit 130, the extraction unit 140 and the calculation generation unit 150 may be implemented by processing circuitry. Part or all of the acquisition unit 120, the morphological analysis performance unit 130, the extraction unit 140 and the calculation generation unit 150 may be implemented as modules of a program executed by the processor 101. For example, the program executed by the processor 101 is referred to also as a generation program. The generation program has been recorded in a record medium, for example.

The acquisition unit 120 acquires multiple pieces of learning data. For example, the acquisition unit 120 acquires the multiple pieces of learning data from the storage unit 110. Alternatively, for example, the acquisition unit 120 acquires the multiple pieces of learning data from an external device. The external device is a cloud server, for example. Incidentally, illustration of the external device is left out. In each of the multiple pieces of learning data, a document and a category have been associated with each other. Further, the document can be represented also as a character string. The category may be regarded as a label in supervised learning.

The morphological analysis performance unit 130 performs morphological analysis on each of the multiple pieces of learning data.

The extraction unit 140 extracts words being predicates from among a plurality of words obtained by the morphological analysis. For example, the extraction unit 140 extracts the words being predicates in regard to each result of the morphological analysis of learning data. Specifically, the extraction unit 140 executes the following process for each document. The extraction unit 140 extracts words being predicates from among a plurality of words obtained by performing the morphological analysis on the document. Incidentally, each of the words being predicates is a word being a verb, an adjective, an adjective verb or a sa-column irregular conjugation noun (in the Japanese language).

Here, a process executed by the acquisition unit 120, the morphological analysis performance unit 130 and the extraction unit 140 will be described below by using a drawing.

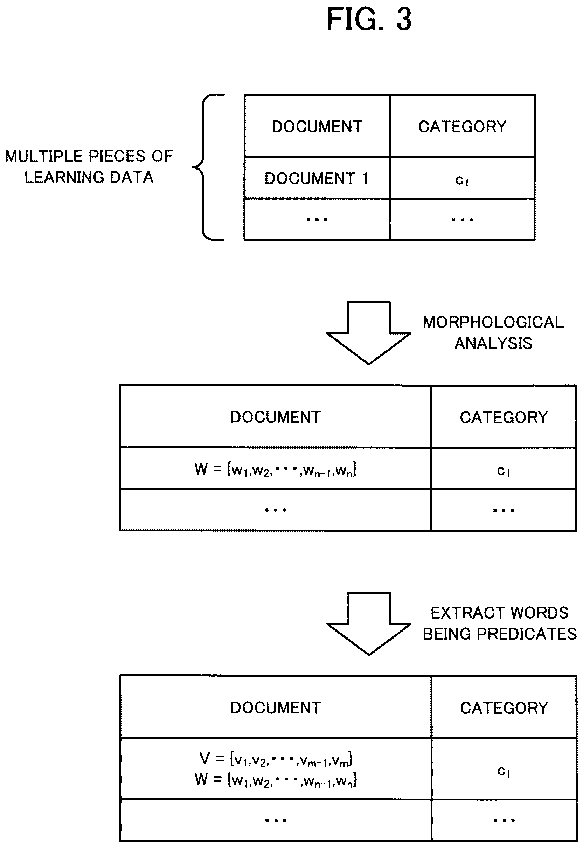

Fig. 3 is a diagram showing a concrete example of a process executed by the information processing device in the first embodiment. Fig. 3 indicates multiple pieces of learning data. For example, the acquisition unit 120 acquires learning data in which a "document 1" and a category "$c_1$" have been associated with each other.

Here, a set C of categories is represented by expression (1).

$$C = \{c_1, c_2, \cdots, c_{l-1}, c_l\} \quad \cdots (1)$$

The morphological analysis performance unit 130 performs the morphological analysis on each of the multiple pieces of learning data. Incidentally, "W" in Fig. 3 represents a set of words. Further, "w" in Fig. 3 represents each word obtained by the morphological analysis.

The extraction unit 140 extracts words being predicates in regard to each result of the morphological analysis of learning data. For example, the extraction unit 140 extracts the words being predicates from among "W" of the "document 1". Incidentally, "V" in Fig. 3 represents a set of the words being predicates. Further, "v" in Fig. 3 represents each word being a predicate.

The calculation generation unit 150 generates a learned model by calculating pointwise mutual information (PMI) based on the plurality of words obtained by the morphological analysis, a plurality of extracted words (i.e., a plurality of words being predicates), and a plurality of categories. The calculation generation process will be described in detail below. The calculation generation unit 150 calculates the PMI regarding a case of co-occurrence of $v_i$, $w_j$ and $c_p$. Specifically, the calculation generation unit 150 calculates the PMI by using expression (2). Incidentally, P represents an appearance probability (probability of appearance) in the document as the learning data. For example, $P(v_i)$ represents the appearance probability of the word $v_i$ being a predicate in the document. Further, i, j and p are arbitrary values.

$$PMI(v_i, w_j, c_p) = \log_2 \frac{P(v_i, w_j, c_p)}{P(v_i)P(w_j)P(c_p)} \quad \cdots (2)$$

Incidentally, when the PMI is negative, the PMI is regarded as 0. The learned model is the $PMI(v_i, w_j, c_p)$. The calculation generation unit 150 generates the learned model as above. When data is inputted to the learned model, the learned model is capable of outputting a category corresponding to the data. Further, the learned model is also capable of outputting a likelihood.

Here, the learned model can be represented as follows.

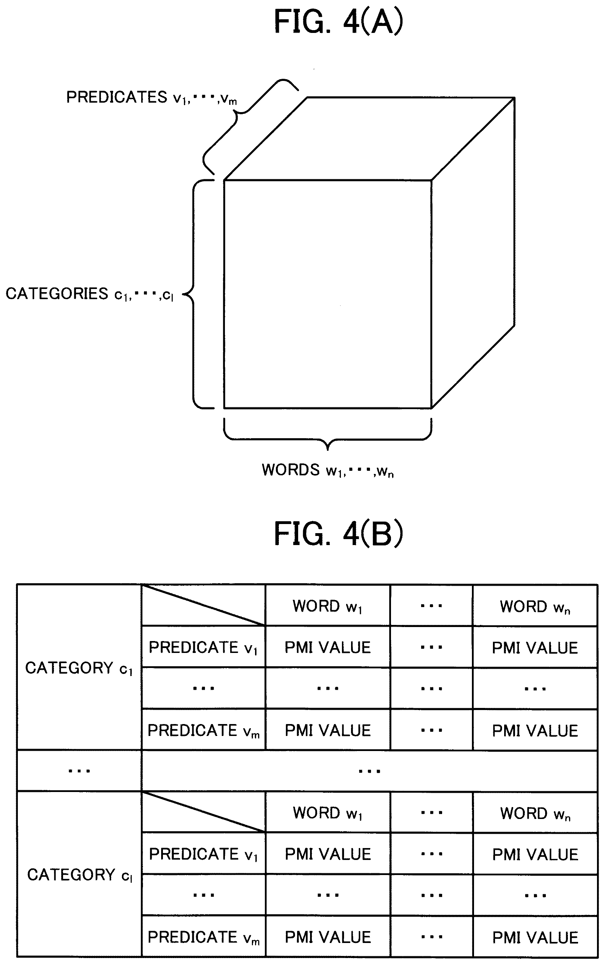

Figs. 4(A) and 4(B) are diagrams showing examples of the image of the learned model in the first embodiment. For example, the learned model is represented as in Fig. 4(A).

Fig. 4(B) shows a case where the learned model in Fig. 4(A) is represented as a table. Information indicating a correspondence relationship between a word w and a word v being a predicate is two-dimensional information. Then, information indicating a correspondence relationship between a category c and the two-dimensional information is three-dimensional information. Therefore, the learned model is represented as three-dimensional information. Further, the learned model may be expressed also as a third-order tensor.

Further, when the number of appearances on $v_i$ and $w_j$ are less than or equal to a predetermined threshold value, the calculation generation unit 150 may correct the $PMI(v_i, w_j, c_p)$ by using a constant $\alpha$. In other words, the calculation generation unit 150 may correct the learn model. Specifically, the calculation generation unit 150 makes the correction by using expression (3).

CORRECTED LEARNED MODEL
$$= PMI(v_i, w_j, c_p) + (PMI(v_i, c_p) + PMI(w_j, c_p)) \cdot \alpha \quad \cdots (3)$$

When the number of appearances on $v_i$ and $w_j$ are less than or equal to the threshold value as above, it can be considered that the amount of learning for generating the learned model is small. Therefore, the calculation generation unit 150 corrects the learned model. Accordingly, the information processing device 100 is capable of increasing the inference accuracy of the learned model.

The calculation generation unit 150 stores the learned model in the storage unit 110. The calculation generation unit 150 may also store the learned model in the external device.

Here, in cases where unsupervised learning is used, there is a problem in that the inference accuracy of the learned model generated by means of the unsupervised learning is low.

According to the first embodiment, the information processing device 100 generates the learned model by using supervised learning. The inference accuracy of the learned model generated by means of the supervised learning is high. Therefore, the information processing device 100 is capable of generating a learned model having high inference accuracy.

Further, in cases where the unsupervised learning is used, a great amount of learning data is used. In contrast, in the supervised learning, the learned model can be generated by using a small amount of learning data. Therefore, the information processing device 100 is capable of generating the learned model by using a small amount of learning data.

<Utilization Phase>

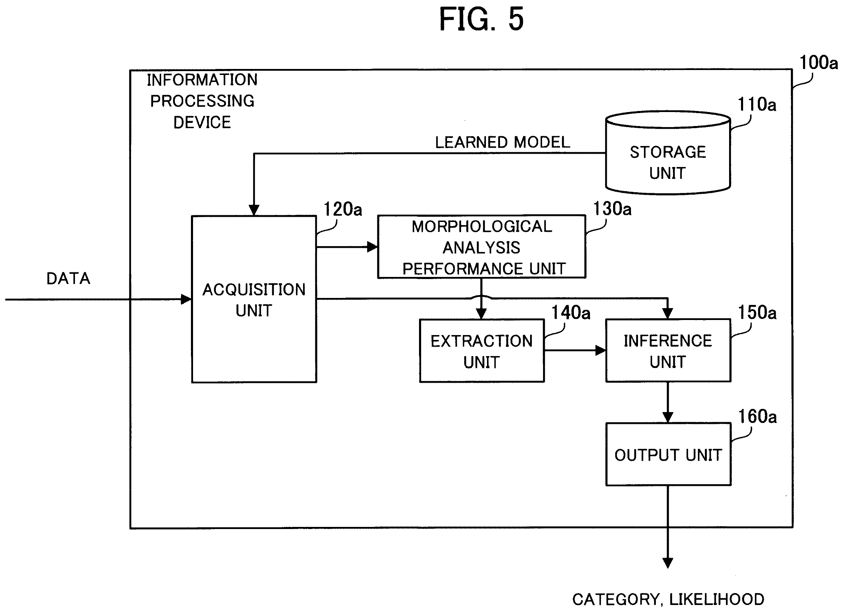

Fig. 5 is a block diagram showing functions included in an information processing device in a utilization phase in the first embodiment. The information processing device 100a includes a storage unit 110a, an acquisition unit 120a, a morphological analysis performance unit 130a, an extraction unit 140a, an inference unit 150a and an output unit 160a. Further, the information processing device 100a can be referred to also as an inference device.

Here, the information processing device 100 and the information processing device 100a may be either the same device or different devices. For example, when the information processing device 100 and the information processing device 100a are the same device, the information processing device 100a further includes the inference unit 150a and the output unit 160a. Further, when the information processing device 100 and the information processing device 100a are the same device, the storage unit 110 and the storage unit 110a may be considered to be the same as each other. Furthermore, when the information processing device 100 and the information processing device 100a are the same device, functions of the acquisition unit 120a, the morphological analysis performance unit 130a and the extraction unit 140a may be considered to be the same as the functions of the acquisition unit 120, the morphological analysis performance unit 130 and the extraction unit 140.

The storage unit 110a may be implemented as a storage area reserved in a volatile storage device or a nonvolatile storage device included in the information processing device 100a.

Part or all of the acquisition unit 120a, the morphological analysis performance unit 130a, the extraction unit 140a, the inference unit 150a and the output unit 160a may be implemented by processing circuitry included in the information processing device 100a. Part or all of the acquisition unit 120a, the morphological analysis performance unit 130a, the extraction unit 140a, the inference unit 150a and the output unit 160a may be implemented as modules of a program executed by a processor included in the information processing device 100a.

The acquisition unit 120a acquires data including characters. For example, the acquisition unit 120a acquires the data from the storage unit 110a. Alternatively, for example, the acquisition unit 120a acquires the data from the external device.

Further, the acquisition unit 120a acquires a learned model. For example, the acquisition unit 120a acquires the learned model from the storage unit 110a. Alternatively, for example, the acquisition unit 120a acquires the learned model from the external device.

The morphological analysis performance unit 130a performs the morphological analysis on the data. For example, a set W of words obtained by the morphological analysis is represented by expression (4).

$$W = \{w_1, w_2, \cdots, w_{n-1}, w_n\} \quad \cdots (4)$$

The extraction unit 140a extracts words being predicates from the result of the morphological analysis. For example, a set V of the extracted words is represented by expression (5).

$$V = \{v_1, v_2, \cdots, v_{m-1}, v_m\} \quad \cdots (5)$$

The inference unit 150a infers a category corresponding to the data acquired by the acquisition unit 120a by using a plurality of words obtained by the morphological analysis, the extracted words (i.e., the words being predicates), and the learned model.

The learned model calculates a value $L(c_p)$ in regard to each category as shown in expression (6).

$$L(c_p) = \sum_{i=1}^{m} \sum_{j=1}^{n} PMI(v_i, w_j, c_p) \quad \cdots (6)$$

Incidentally, when the learned model has been corrected, the expression (6) is represented by expression (7).

$$L(c_p) = \sum_{i=1}^{m} \sum_{j=1}^{n} PMI(v_i, w_j, c_p) + \left( PMI(v_i, c_p) + PMI(w_j, c_p) \right) \cdot \alpha \quad \cdots (7)$$

After the calculation of the value $L(c_p)$ in regard to each category, the learned model outputs a category CM corresponding to a maximum value as shown in expression (8).

$$CM = \arg\max\{L(c_p)\} \quad \cdots (8)$$

As above, it is inferred that the category corresponding to the data acquired by the acquisition unit 120a is the category CM.

Further, the learned model outputs the likelihood.

The output unit 160a outputs the category CM and the likelihood. For example, the output unit 160a outputs the category CM and the likelihood to a display of the information processing device 100a.

Second Embodiment

Next, a second embodiment will be described below. In the second embodiment, the description will be given mainly of features different from those in the first embodiment. In the second embodiment, the description is omitted for features in common with the first embodiment.

<Learning Phase>

Processing by the acquisition unit 120, the morphological analysis performance unit 130 and the extraction unit 140 in the second embodiment is the same as the processing by the acquisition unit 120, the morphological analysis performance unit 130 and the extraction unit 140 in the first embodiment.

The calculation generation unit 150 generates a learned model by calculating the pointwise mutual information based on the plurality of words obtained by the morphological analysis, the plurality of extracted words (i.e., the plurality of words being predicates), and the plurality of categories. However, in the calculation of the pointwise mutual information, the calculation generation unit 150 selects two words from the plurality of words obtained by the morphological analysis and calculates the pointwise mutual information by using the selected two words. The calculation generation process will be described in detail below. In the calculation of the pointwise mutual information, the calculation generation unit 150 selects a word $w_j$ and a word $w_k$ from words $w_1$ - $w_n$. The calculation generation unit 150 calculates the PMI regarding a case of co-occurrence of $v_i$, $w_j$, $w_k$ and $c_p$. Specifically, the calculation generation unit 150 calculates the PMI by using expression (9). Incidentally, P represents the appearance probability in the document as the learning data. Further, i, j, k and p are arbitrary values.

$$PMI(v_i, w_j, w_k, c_p) = \log_2 \frac{P(v_i, w_j, w_k, c_p)}{P(v_i)P(w_j)P(w_k)P(c_p)} \quad \cdots (9)$$

Incidentally, when the PMI is negative, the PMI is regarded as 0. The learned model is the PMI $(v_i, w_j, w_k, c_p)$. The calculation generation unit 150 generates the learned model as above. The learned model is capable of outputting the category and the likelihood.

Here, the learned model can be represented as follows.

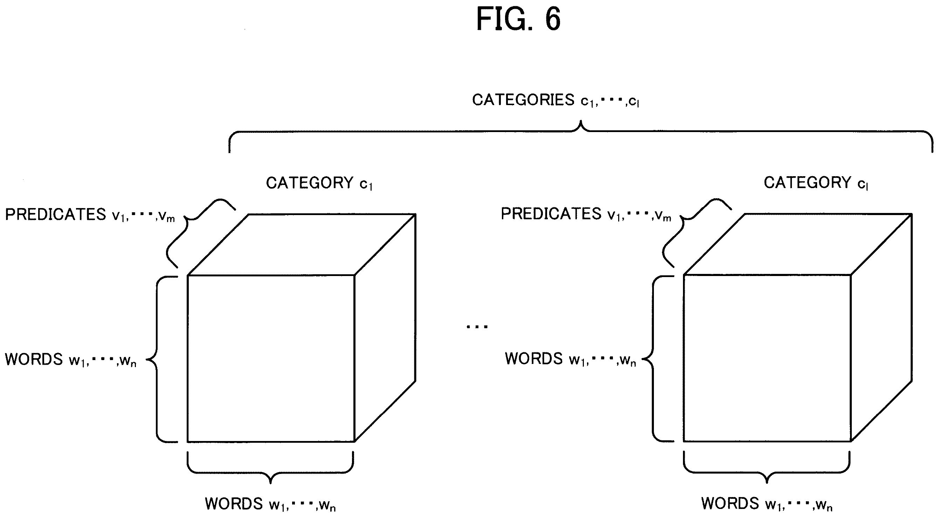

Fig. 6 is a diagram showing an example of the image of the learned model in the second embodiment. As shown in Fig. 6, the learned model is represented as four-dimensional information. Further, the learned model may be expressed also as a fourth-order tensor.

The learned model shown in Fig. 4 is three-dimensional information. On the other hand, the learned model shown in Fig. 6 is four-dimensional information. Therefore, the learned model shown in Fig. 6 has higher inference accuracy than the learned model shown in Fig. 4. Thus, according to the second embodiment, the information processing device 100 is capable of generating a learned model having higher inference accuracy.

Further, when the number of appearances on $v_i$, $w_j$ and $w_k$ are less than or equal to a predetermined threshold value, the calculation generation unit 150 may correct the PMI ($v_i$, $w_j$, $w_k$, $c_p$) by using a constant $\alpha$. In other words, the calculation generation unit 150 may correct the learned model. Specifically, the calculation generation unit 150 makes the correction by using expression (10).

CORRECTED LEARNED MODEL

$$= \mathrm{PMI}\big(v_i, w_j, w_k, c_p\big) + \Big(\mathrm{PMI}\big(v_i, c_p\big) + \mathrm{PMI}\big(w_j, c_p\big) + \mathrm{PMI}\big(w_k, c_p\big)\Big)$$

$$\cdot \, \alpha \cdots (10)$$

When the number of appearances on $v_i$, $w_j$ and $w_k$ are less than or equal to the threshold value as above, it can be considered that the amount of learning for generating the learned model is small. Therefore, the calculation generation unit 150 corrects the learned model. Accordingly, the information processing device 100 is capable of increasing the inference accuracy of the learned model.

The calculation generation unit 150 stores the learned model in the storage unit 110. The calculation generation unit 150 may also store the learned model in an external device.

<Utilization Phase>

Processing by the acquisition unit 120a, the morphological analysis performance unit 130a and the extraction unit 140a in the second embodiment is the same as the processing by the acquisition unit 120a, the morphological analysis performance unit 130a and the extraction unit 140a in the first embodiment.

The inference unit 150a infers the category corresponding to the data acquired by the acquisition unit 120a by using the plurality of words obtained by the morphological analysis, the extracted words (i.e., the words being predicates), and the learned model.

The learned model calculates the value $L(c_p)$ in regard to each category as shown in expression (11).

$$L(c_p) = \sum_{i=1}^{m} \sum_{j=1}^{n} \sum_{j=1}^{n} \mathrm{PMI}(v_i, w_j, w_k, c_p) \quad \cdots (11)$$

Incidentally, when the learned model has been corrected, the expression (11) is represented by expression (12).

$$L(c_p) = \sum_{i=1}^{m} \sum_{j=1}^{n} \sum_{j=1}^{n} \mathrm{PMI}\big(v_i, w_j, w_k, c_p\big) + \big(\mathrm{PMI}\big(v_i, c_p\big) + \mathrm{PMI}\big(w_j, c_p\big)$$
$$+ \mathrm{PMI}\big(w_k, c_p\big)\big) \cdot \alpha \quad \cdots (12)$$

After the calculation of the value $L(c_p)$ in regard to each category, the learned model outputs the category CM corresponding to the maximum value as shown in expression (8).

As above, it is inferred that the category corresponding to the data acquired by the acquisition unit 120a is the category CM.

Further, the learned model outputs the likelihood.

The output unit 160a outputs the category CM and the likelihood. For example, the output unit 160a outputs the category CM and the likelihood to the display of the information processing device 100a.

Third Embodiment

Next, a third embodiment will be described below. In the third embodiment, a description will be given of a method of generating a learned model that infers the category by a method different from those in the first and second embodiments.

<Learning Phase>

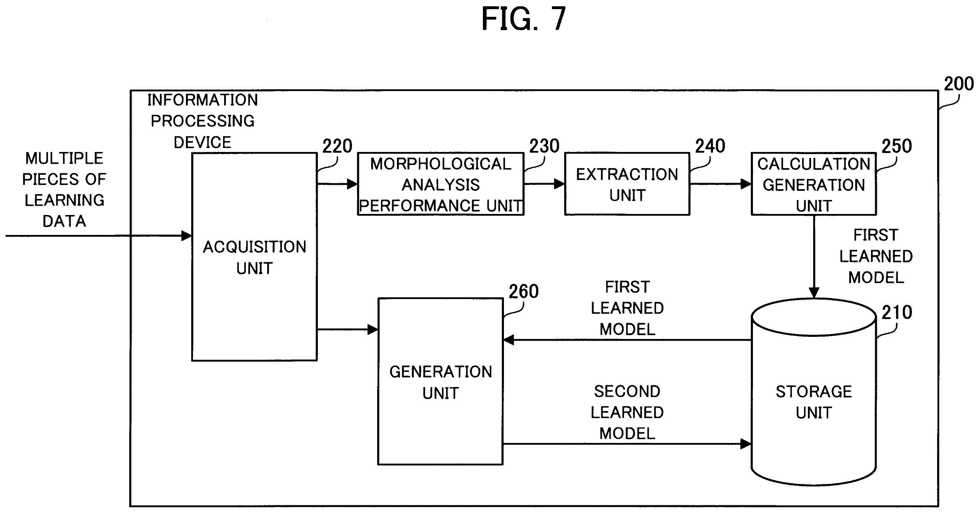

Fig. 7 is a block diagram showing functions included in an information processing device in the learning phase in the third embodiment. The information processing device 200 is a device that executes a generation method. The information processing device 200 includes a storage unit 210, an acquisition unit 220, a morphological analysis performance unit 230, an extraction unit 240, a calculation generation unit 250 and a generation unit 260. Further, the information processing device 200 can be referred to also as a computer.

The storage unit 210 may be implemented as a storage area reserved in a volatile storage device or a nonvolatile storage device included in the information processing device 200.

Part or all of the acquisition unit 220, the morphological analysis performance unit 230, the extraction unit 240, the calculation generation unit 250 and the generation unit 260 may be implemented by processing circuitry. Part or all of the acquisition unit 220, the morphological analysis performance unit 230, the extraction unit 240, the calculation generation unit 250 and the generation unit 260 may be implemented as modules of a program executed by a processor included in the information processing device 200. For example, the program executed by the processor is referred to also as a generation program. The generation program has been recorded in a record medium, for example.

The acquisition unit 220 acquires multiple pieces of learning data. For example, the acquisition unit 220 acquires the multiple pieces of learning data from the storage unit 210 or the external device. Incidentally, in each of the multiple pieces of learning data, a document and a category have been associated with each other. Parenthetically, the category may be regarded as a label in the supervised learning.

The morphological analysis performance unit 230 performs the morphological analysis on each of the multiple pieces of learning data.

The extraction unit 240 extracts words being predicates from among a plurality of words obtained by the morphological analysis. For example, the extraction unit 240 extracts the words being predicates in regard to each result of the morphological analysis of learning data. Incidentally, each of the words being predicates is a word being a verb, an adjective, an adjective verb or a sa-column irregular conjugation noun (in the Japanese language).

Here, a process executed by the acquisition unit 220, the morphological analysis performance unit 230 and the extraction unit 240 will be described below by using a drawing.

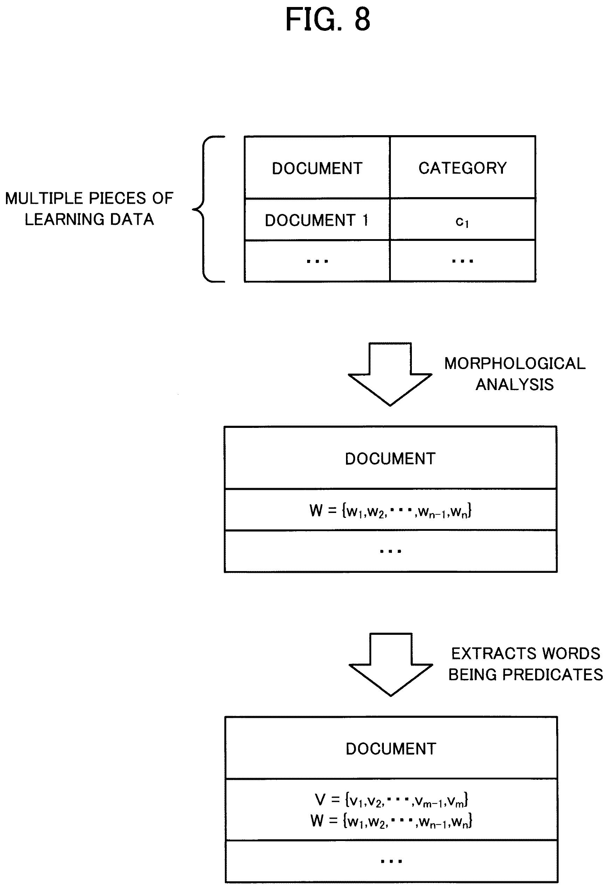

Fig. 8 is a diagram showing a concrete example of a process executed by the information processing device in the third embodiment. Fig. 8 indicates multiple pieces of learning data. For example, the acquisition unit 220 acquires learning data in which the "document 1" and the category "ci" have been associated with each other.

Here, no category is used in the subsequent processing. Therefore, the categories are left out.

The morphological analysis performance unit 230 performs the morphological analysis on each of the multiple pieces of learning data.

The extraction unit 240 extracts words being predicates in regard to each result of the morphological analysis of learning data. For example, the extraction unit 240 extracts the words being predicates from among "W" of the "document 1".

The calculation generation unit 250 generates a first learned model by calculating the pointwise mutual information based on the plurality of words obtained by the morphological analysis and the plurality of extracted words (i.e., the plurality of words being predicates). However, in the calculation of the pointwise mutual information, the calculation generation unit 250 selects two words from the plurality of words obtained by the morphological analysis and calculates the pointwise mutual information by using the selected two words. The calculation generation process will be described in detail below. In the calculation of the pointwise mutual information, the calculation generation unit 250 selects a word $w_j$ and a word $w_k$ from words $w_1$ - $w_n$. The calculation generation unit 250 calculates the PMI regarding a case of co-occurrence of $v_i$, $w_j$ and $w_k$. Specifically, the calculation generation unit 250 calculates the PMI by using expression (13). Incidentally, i, j and k are arbitrary values.

$$ \mathrm{PMI}(v_i, w_j, w_k) = \log_2 \frac{P(v_i, w_j, w_k)}{P(v_i)P(w_j)P(w_k)} \quad \cdots (13) $$

Incidentally, when the PMI is negative, the PMI is regarded as 0. The first learned model is the $\mathrm{PMI}(v_i, w_j, w_k)$. The

calculation generation unit 250 generates the first learned model as above.

Here, the first learned model can be represented as follows.

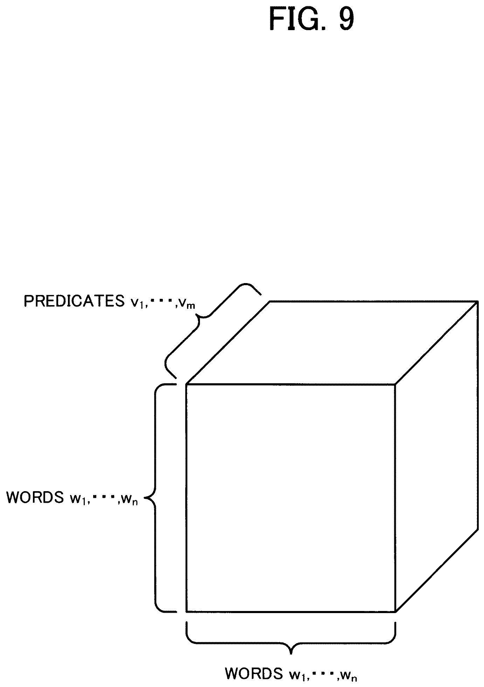

Fig. 9 is a diagram showing an example of the image of the first learned model in the third embodiment. As shown in Fig. 9, the first learned model is represented as three-dimensional information. Further, the first learned model may be expressed also as a third-order tensor.

Further, when the number of appearances on $v_i$, $w_j$ and $w_k$ are less than or equal to a predetermined threshold value, the calculation generation unit 250 may correct the $PMI(v_i, w_j, w_k)$ by using a constant $\alpha$. In other words, the calculation generation unit 250 may correct the first learned model. Specifically, the calculation generation unit 250 makes the correction by using expression (14). Further, when j and k are arbitrary values, $w_j$ and $w_k$ form a permutation. When learning is executed under a condition j < k, it is also possible to execute the learning by interchanging words included in a sentence. For example, in a sentence " a child viewing a cat ", $w_j$ is "cat" and $w_k$ is "child". The "child" and the "cat" are interchanged with each other. Then, $w_j$ turns into "child" and $w_k$ turns into "cat". Accordingly, the phrases "a cat viewing a child" and "a child viewing a cat", which have different meanings, are learned. Therefore, a word order-dependent meaning that cannot be learned by the conventional BoW (Bag of Words) is learned.

$$\text{CORRECTED FIRST LEARNED MODEL}$$
$$= \text{PMI}\big(v_i, w_j, w_k\big) + \big(\text{PMI}\big(v_i, w_j\big) + \text{PMI}\big(v_i, w_k\big)\big) \cdot \alpha \quad \cdots (14)$$

When the number of appearances on $v_i$, $w_j$ and $w_k$ are less than or equal to the threshold value as above, it can be considered that the amount of learning for generating the first learned model is small. Therefore, the calculation generation unit 250 corrects the first learned model. Accordingly, the information processing device 200 is capable of increasing the inference accuracy of the first learned model.

The calculation generation unit 250 stores the first learned model in the storage unit 210. The calculation generation unit 250 may also store the first learned model in the external device.

The generation unit 260 generates a second learned model that outputs a category corresponding to data when the data is inputted thereto based on multiple pieces of learning data, the first learned model, and a predetermined method. Here, the predetermined method is a conventional method used in machine learning. The conventional method is Support Vector Machine, random forest, or the like, for example. For example, the generation unit 260 generates the second learned model by executing learning by use of multiple pieces of learning data and the first learned model according to the predetermined method so that the category corresponding to the data is outputted.

Further, in the conventional technology, words in a document as the learning data are converted to numerical vectors such as one-hot vectors or tfidf vectors. Then, the numerical vectors and categories are associated with each other and the learning is executed. As above, in the learning phase, the learning is executed by using vectors.

The generation unit 260 may also generate the second learned model that outputs the category and the likelihood. The generation unit 260 stores the second learned model in the storage unit 210. The generation unit 260 may also store the second learned model in the external device.

Here, in cases where the unsupervised learning is used, there is a problem in that the inference accuracy of the learned model generated by means of the unsupervised learning is low.

According to the third embodiment, the information processing device 200 generates the second learned model by using supervised learning. The inference accuracy of the learned model generated by means of the supervised learning is high. Therefore, the information processing device 200 is capable of generating a learned model having high inference accuracy.

<Utilization Phase>

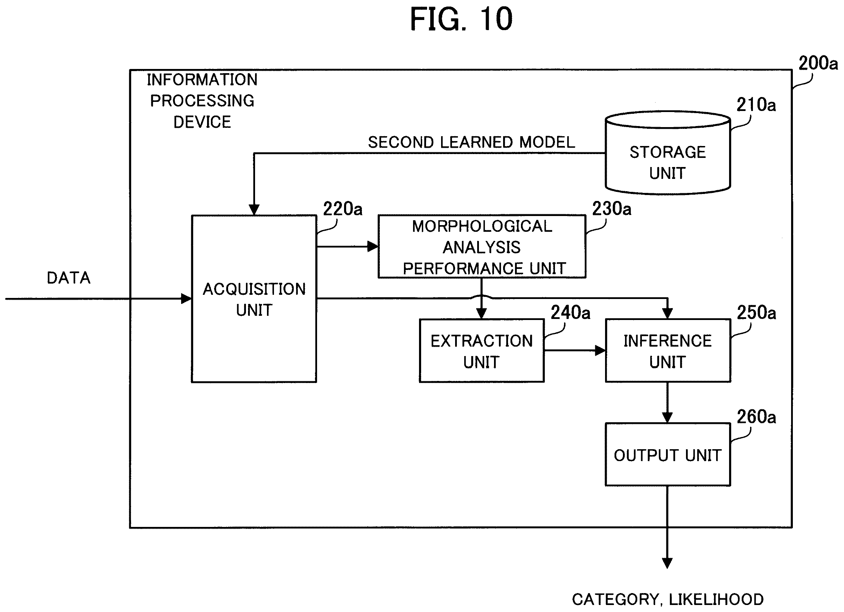

Fig. 10 is a block diagram showing functions included in an information processing device in the utilization phase in the third embodiment. The information processing device 200a includes a storage unit 210a, an acquisition unit 220a, a morphological analysis performance unit 230a, an extraction unit 240a, an inference unit 250a and an output unit 260a. Further, the information processing device 200a can be referred to as an inference device.

Here, the information processing device 200 and the information processing device 200a may be either the same device or different devices. For example, when the information processing device 200 and the information processing device 200a are the same device, the information processing device 200a further includes the inference unit 250a and the output unit 260a. Further, when the information processing device 200 and the information processing device 200a are the same device, the storage unit 210 and the storage unit 210a may be considered to be the same as each other. Furthermore, when the information processing device 200 and the information processing device 200a are the same device, functions of the acquisition unit 220a, the morphological analysis performance unit 230a and the extraction unit 240a may be considered to be the same as the functions of the acquisition unit 220, the morphological analysis performance unit 230 and the extraction unit 240.

The storage unit 210a may be implemented as a storage area reserved in a volatile storage device or a nonvolatile storage device included in the information processing device 200a.

Part or all of the acquisition unit 220a, the morphological analysis performance unit 230a, the extraction unit 240a, the inference unit 250a and the output unit 260a may be implemented by processing circuitry included in the information processing device 200a. Part or all of the acquisition unit 220a, the morphological analysis performance unit 230a, the extraction unit 240a, the inference unit 250a and the output unit 260a may be implemented as modules of a program executed by a processor included in the information processing device 200a.

The acquisition unit 220a acquires data including characters. For example, the acquisition unit 220a acquires the data from the storage unit 210a. Alternatively, for example, the acquisition unit 220a acquires the data from the external device.

Further, the acquisition unit 220a acquires the second learned model. For example, the acquisition unit 220a acquires the second learned model from the storage unit 210a. Alternatively, for example, the acquisition unit 220a acquires the second learned model from the external device.

The morphological analysis performance unit 230a performs the morphological analysis on the data.

The extraction unit 240a extracts words being predicates from the result of the morphological analysis.

The inference unit 250a infers the category corresponding to the data acquired by the acquisition unit 220a by using the plurality of words obtained by the morphological analysis, the extracted words (i.e., the words being predicates), and the second learned model. Specifically, the inference unit 250a vectorizes the plurality of words and the extracted words. The inference unit 250a infers the category corresponding to the data by using sentence vectors of distributed representations obtained by the vectorization and the second learned model. Here, a process executed by the second learned model will be described below by using a drawing.

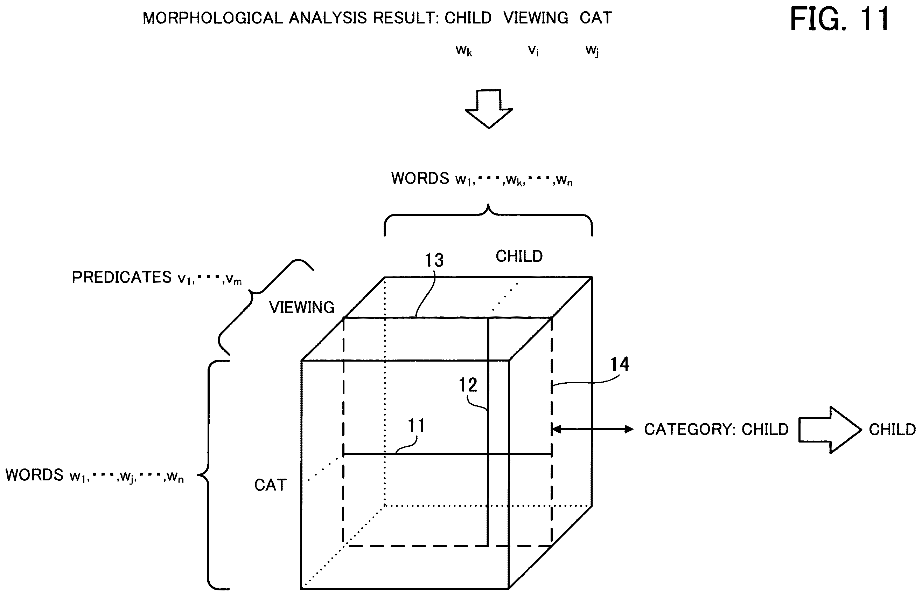

Fig. 11 is a diagram showing a concrete example of the process executed by the second learned model in the third embodiment. Fig. 11 shows the result of the morphological analysis. The result of the morphological analysis is "child", "viewing" and "cat". The word $w_j$ is assumed to be "cat". The word $v_i$ is assumed to be "viewing". The word $w_k$ is assumed to be "child".

The second learned model detects a vector 11 in a line of "cat". Specifically, the vector 11 is represented as "$\{PMI(viewing, cat, w_1), \cdots, PMI(viewing, cat, w_j), \cdots, PMI(viewing, cat, w_n)\}$".

The second learned model detects a vector 12 in a line of "child". Specifically, the vector 12 is represented as "$\{PMI(viewing, w_1, child), \cdots, PMI(viewing, w_k, child), \cdots, PMI(viewing, w_n, child)\}$".

The second learned model detects a vector 13 in a line of "viewing". Specifically, the vector 13 is represented as "$\{\{PMI(viewing, w_1, w_1), \cdots, PMI(viewing, w_1, w_k), \cdots, PMI(viewing, w_1, w_n)\}, \cdots, \{PMI(viewing, w_j, w_1), \cdots, PMI(viewing, w_j, w_k), \cdots, PMI(viewing, w_j, w_n)\}, \cdots, \{PMI(viewing, w_n, w_1), \cdots, PMI(viewing, w_n, w_k), \cdots, PMI(viewing, w_n, w_n)\}\}$".

The second learned model connects the vectors 11, 12 and 13 together. The second learned model detects the category "child" corresponding to the distributed representation (i.e., sentence vector) represented by the connection. For example, in Fig. 11, this distributed representation is indicated by a plane 14. The second learned model outputs "child".

As above, the category corresponding to the data acquired by the acquisition unit 120a is inferred.

Further, the second learned model outputs the likelihood.

The output unit 260a outputs the category and the likelihood. For example, the output unit 260a outputs the category and the likelihood to a display of the information processing device 200a.

Features in the embodiments described above can be appropriately combined with each other.

**DESCRIPTION OF REFERENCE CHARACTERS**

11, 12, 13: vector, 14: plane, 100: information processing device, 100a: information processing device, 101: processor, 102: volatile storage device, 103: nonvolatile storage device, 110: storage unit, 110a: storage unit, 120: acquisition unit, 120a: acquisition unit, 130: morphological analysis performance unit, 130a: morphological analysis performance unit, 140: extraction unit, 140a: extraction unit, 150: calculation generation unit, 150a: inference unit, 160a: output unit, 200: information processing device, 200a: information processing device, 210: storage unit, 210a: storage unit, 220: acquisition unit, 220a: acquisition unit, 230: morphological analysis performance unit, 230a: morphological analysis performance unit, 240: extraction unit, 240a: extraction unit, 250: calculation generation unit, 250a: inference unit, 260: generation unit, 260a: output unit

**Claims**

**1.** An information processing device comprising:

an acquisition unit that acquires multiple pieces of learning data in each of which a document and a category have been associated with each other;

a morphological analysis performance unit that performs morphological analysis on each of the multiple pieces of learning data;

an extraction unit that extracts words being predicates from among a plurality of words obtained by the morphological analysis; and

a calculation generation unit that generates a learned model by calculating pointwise mutual information based on the plurality of words obtained by the morphological analysis, a plurality of extracted words, and a plurality of categories, the learned model being a learned model which outputs a category corresponding to data when the data is inputted.

2. The information processing device according to claim 1, wherein when the number of appearances on the word being a predicate and a word obtained by the morphological analysis are less than or equal to a predetermined threshold value, the calculation generation unit corrects the learned model by using a constant.

3. The information processing device according to claim 1, wherein in the calculation of the pointwise mutual information, the calculation generation unit selects two words from the plurality of words obtained by the morphological analysis and generates the learned model as four-dimensional information by calculating the pointwise mutual information by using the selected two words.

4. The information processing device according to claim 3, wherein when the number of appearances on the word being a predicate and the two words selected from the plurality of words obtained by the morphological analysis are less than or equal to a predetermined threshold value, the calculation generation unit corrects the learned model by using a constant.

5. The information processing device according to any one of claims 1 to 4, wherein the calculation generation unit generates the learned model that outputs the category and a likelihood.

6. An information processing device comprising:

an acquisition unit that acquires multiple pieces of learning data in each of which a document and a category have been associated with each other;

a morphological analysis performance unit that performs morphological analysis on each of the multiple pieces of learning data;

an extraction unit that extracts words being predicates from among a plurality of words obtained by the morphological analysis;

a calculation generation unit that generates a first learned model by calculating pointwise mutual information based on the plurality of words obtained by the morphological analysis and a plurality of extracted words; and

a generation unit that generates a second learned model based on the multiple pieces of learning data, the first learned model, and a predetermined method, the second learned model being a learned model which outputs a category corresponding to data when the data is inputted,

wherein in the calculation of the pointwise mutual information, the calculation generation unit selects two words from the plurality of words obtained by the morphological analysis and calculates the pointwise mutual information by using the selected two words.

7. The information processing device according to claim 6, wherein when the number of appearances on the word being a predicate and the two words selected from the plurality of words obtained by the morphological analysis are less than or equal to a predetermined threshold value, the calculation generation unit corrects the first learned model by using a constant.

8. The information processing device according to claim 6 or 7, wherein the calculation generation unit generates the second learned model that outputs the category and a likelihood.

9. A generation method performed by an information processing device, the generation method comprising:

acquiring multiple pieces of learning data in each of which a document and a category have been associated with each other;

performing morphological analysis on each of the multiple pieces of learning data;

extracting words being predicates from among a plurality of words obtained by the morphological analysis; and generating a learned model by calculating pointwise mutual information based on the plurality of words obtained by the morphological analysis, a plurality of extracted words, and a plurality of categories, the learned model being a learned model which outputs a category corresponding to data when the data is inputted.

10. A generation method performed by an information processing device, the generation method comprising:

acquiring multiple pieces of learning data in each of which a document and a category have been associated with each other;
performing morphological analysis on each of the multiple pieces of learning data;
extracting words being predicates from among a plurality of words obtained by the morphological analysis;
generating a first learned model by calculating pointwise mutual information based on the plurality of words obtained by the morphological analysis and a plurality of extracted words;

and

generating a second learned model based on the multiple pieces of learning data, the first learned model, and a predetermined method, the second learned model being a learned model which outputs a category corresponding to data when the data is inputted,
wherein in the calculation of the pointwise mutual information, two words are selected from the plurality of words obtained by the morphological analysis and the pointwise mutual information is calculated by using the selected two words.

11. A generation program that causes a computer to execute a process of:

acquiring multiple pieces of learning data in each of which a document and a category have been associated with each other;
performing morphological analysis on each of the multiple pieces of learning data;
extracting words being predicates from among a plurality of words obtained by the morphological analysis; and
generating a learned model by calculating pointwise mutual information based on the plurality of words obtained by the morphological analysis, a plurality of extracted words, and a plurality of categories, the learned model being a learned model which outputs a category corresponding to data when the data is inputted.

12. A generation program that causes a computer to execute a process of:

acquiring multiple pieces of learning data in each of which a document and a category have been associated with each other;
performing morphological analysis on each of the multiple pieces of learning data;
extracting words being predicates from among a plurality of words obtained by the morphological analysis;
generating a first learned model by calculating pointwise mutual information based on the plurality of words obtained by the morphological analysis and a plurality of extracted words;

and

generating a second learned model based on the multiple pieces of learning data, the first learned model, and a predetermined method, the second learned model being a learned model which outputs a category corresponding to data when the data is inputted,
wherein in the calculation of the pointwise mutual information, two words are selected from the plurality of words obtained by the morphological analysis and the pointwise mutual information is calculated by using the selected two words.

# FIG. 1

INFORMATION PROCESSING DEVICE — 100

PROCESSOR — 101

VOLATILE STORAGE DEVICE — 102

NONVOLATILE STORAGE DEVICE — 103

# FIG. 2

# FIG. 3

MULTIPLE PIECES OF
LEARNING DATA

| DOCUMENT | CATEGORY |
|---|---|
| DOCUMENT 1 | $c_1$ |
| . . . | . . . |

MORPHOLOGICAL
ANALYSIS

| DOCUMENT | CATEGORY |
|---|---|
| $W = \{w_1, w_2, \cdots, w_{n-1}, w_n\}$ | $c_1$ |
| . . . | . . . |

EXTRACT WORDS
BEING PREDICATES

| DOCUMENT | CATEGORY |
|---|---|
| $V = \{v_1, v_2, \cdots, v_{m-1}, v_m\}$<br>$W = \{w_1, w_2, \cdots, w_{n-1}, w_n\}$ | $c_1$ |
| . . . | . . . |

# FIG. 4(A)

PREDICATES $v_1, \cdots, v_m$

CATEGORIES $c_1, \cdots, c_l$

WORDS $w_1, \cdots, w_n$

# FIG. 4(B)

| | | WORD $w_1$ | $\cdots$ | WORD $w_n$ |
|---|---|---|---|---|
| CATEGORY $c_1$ | PREDICATE $v_1$ | PMI VALUE | $\cdots$ | PMI VALUE |
| | $\cdots$ | $\cdots$ | $\cdots$ | $\cdots$ |
| | PREDICATE $v_m$ | PMI VALUE | $\cdots$ | PMI VALUE |
| $\cdots$ | $\cdots$ | | | |
| CATEGORY $c_l$ | | WORD $w_1$ | $\cdots$ | WORD $w_n$ |
| | PREDICATE $v_1$ | PMI VALUE | $\cdots$ | PMI VALUE |
| | $\cdots$ | $\cdots$ | $\cdots$ | $\cdots$ |
| | PREDICATE $v_m$ | PMI VALUE | $\cdots$ | PMI VALUE |

# FIG. 5

INFORMATION PROCESSING DEVICE 100a

STORAGE UNIT 110a

LEARNED MODEL

ACQUISITION UNIT 120a

MORPHOLOGICAL ANALYSIS PERFORMANCE UNIT 130a

EXTRACTION UNIT 140a

INFERENCE UNIT 150a

OUTPUT UNIT 160a

DATA

CATEGORY, LIKELIHOOD

# FIG. 6

CATEGORIES $c_1, \cdots, c_l$

CATEGORY $c_1$

PREDICATES $v_1, \cdots, v_m$

WORDS $w_1, \cdots, w_n$

WORDS $w_1, \cdots, w_n$

...

CATEGORY $c_l$

PREDICATES $v_1, \cdots, v_m$

WORDS $w_1, \cdots, w_n$

WORDS $w_1, \cdots, w_n$

EP 4 697 209 A1

# FIG. 7

INFORMATION PROCESSING DEVICE — 200

MULTIPLE PIECES OF LEARNING DATA → ACQUISITION UNIT — 220

MORPHOLOGICAL ANALYSIS PERFORMANCE UNIT — 230

EXTRACTION UNIT — 240

CALCULATION GENERATION UNIT — 250

FIRST LEARNED MODEL

GENERATION UNIT — 260

FIRST LEARNED MODEL

SECOND LEARNED MODEL

STORAGE UNIT — 210

EP 4 697 209 A1

# FIG. 8

MULTIPLE PIECES OF
LEARNING DATA

| DOCUMENT | CATEGORY |
|----------|----------|
| DOCUMENT 1 | $c_1$ |
| . . . | . . . |

⬇ MORPHOLOGICAL
ANALYSIS

| DOCUMENT |
|----------|
| $W = \{w_1, w_2, \cdots, w_{n-1}, w_n\}$ |
| . . . |

⬇ EXTRACTS WORDS
BEING PREDICATES

| DOCUMENT |
|----------|
| $V = \{v_1, v_2, \cdots, v_{m-1}, v_m\}$<br>$W = \{w_1, w_2, \cdots, w_{n-1}, w_n\}$ |
| . . . |

# FIG. 9

PREDICATES $v_1, \cdots, v_m$

WORDS $w_1, \cdots, w_n$

WORDS $w_1, \cdots, w_n$

# FIG. 10

EP 4 697 209 A1

MORPHOLOGICAL ANALYSIS RESULT: CHILD  VIEWING  CAT

$w_k$        $v_i$        $w_j$

FIG. 11

WORDS $w_1, \cdots, w_k, \cdots, w_n$

CHILD

PREDICATES $v_1, \cdots, v_m$

VIEWING

13

14

12

11

CAT

WORDS $w_1, \cdots, w_j, \cdots, w_n$

CATEGORY: CHILD ⟹ CHILD

EP 4 697 209 A1

## INTERNATIONAL SEARCH REPORT

| International application No. |
| --- |
| **PCT/JP2023/018077** |

| A. | CLASSIFICATION OF SUBJECT MATTER |
| --- | --- |

*G06F 18/2413*(2023.01)i; *G06F 18/22*(2023.01)i; *G06F 40/268*(2020.01)i; *G06N 20/00*(2019.01)i
FI:    G06F18/2413; G06F18/22; G06F40/268; G06N20/00

According to International Patent Classification (IPC) or to both national classification and IPC

| B. | FIELDS SEARCHED |
| --- | --- |

Minimum documentation searched (classification system followed by classification symbols)

G06F18/2413; G06F18/22; G06F40/268; G06N20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2014-56331 A (HITACHI ADVANCED SYSTEMS CORP.) 27 March 2014 (2014-03-27) paragraphs [0034], [0043]-[0070], fig. 2, 4, 6, 8, 10-12, 14-15 | 1, 5, 9, 11 |
| Y | | 2 |
| A | | 3-4, 6-8, 10, 12 |
| Y | WO 2022/091639 A1 (JFE STEEL CORPORATION) 05 May 2022 (2022-05-05) paragraphs [0049]-[0050] | 2 |
| Y | JP 2008-285111 A (DENSO CORPORATION) 27 November 2008 (2008-11-27) paragraphs [0058], [0116], [0137] | 2 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 July 2023** | **01 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 697 209 A1

### INTERNATIONAL SEARCH REPORT
**Information on patent family members**

International application No.

**PCT/JP2023/018077**

| Patent document cited in search report | | | Publication date (day/month/year) | Patent family member(s) | | | Publication date (day/month/year) |
|---|---|---|---|---|---|---|---|
| JP | 2014-56331 | A | 27 March 2014 | (Family: none) | | | |
| WO | 2022/091639 | A1 | 05 May 2022 | TW | 202230169 | A | |
| | | | | CN | 116348829 | A | |
| | | | | KR | 10-2023-0066093 | A | |
| JP | 2008-285111 | A | 27 November 2008 | DE | 102008022472 | A1 | |

Form PCT/ISA/210 (patent family annex) (January 2015)

25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022049668 A